# EUROPEAN PATENT SPECIFICATION

(11) **EP 0 800 011 B1**
(45) Date of publication and mention of the grant of the patent: **13.11.2002**
(21) Application number: 97105057.0
(22) Date of filing: 25.03.1997
(51) Int. Cl.: F16C 35/077, B60B 27/00

(54) **Protective element against electrolytic corrosion, particularly for the strut of a vehicle and its bearing**
Schutzelement gegen elektrolytische Korrosion, insbesondere für ein Kraftfahrzeugfederbein und sein Lager
Elément de protection empêchant la corrosion électrolytique, en particulier entre une jambe de suspension de véhicule et son palier

(30) Priority: 26.03.1996 IT TO960233
(43) Date of publication of application: 08.10.1997
(73) Proprietor: SKF INDUSTRIE S.p.A., 10121 Torino (IT)
(72) Inventor: Vignotto, Angelo, 10100 Torino (IT); Ruetter, Andreas, 10064 Pinerolo (IT); Pons, Luciano, 10064 Pinerolo (IT)
(74) Representative: Plebani, Rinaldo

(56) References cited:
- EP-A- 0 687 826
- DE-A- 1 605 082
- DE-A- 2 427 688
- US-A- 5 454 628
- PATENT ABSTRACTS OF JAPAN vol. 14, no. 300 (M-0991), 28 June 1990 & JP 02 095901 A (NTN), 6 April 1990,
- PATENT ABSTRACTS OF JAPAN vol. 96, no. 2, 29 February 1996 & JP 07 279972 A (NTN), 27 October 1995,

## Description

The present invention relates to a bearing unit with a corrosion-protective element for protecting junctions between metal parts against electrolytic corrosion, particularly for a coupling between a bearing and a strut of a motor vehicle according to the first part of claim 1 (DE-A- 1 605 082).

It is known that at junctions between parts, or mechanical components, made from different metals connected together in direct contact, electrical potential differences are set up between the parts through an electrochemical effect (voltaic effect) and, in time, cause oxidation at the zone of contact, commonly called electrolytic corrosion; this action is greatly enhanced by the presence of moisture.

Various measures are therefore used to limit or prevent such phenomena from arising; one such measure consists of varnishing the facing parts with special varnishes which are electrically insulating and non-electrostatic; this solution does not give good results, especially in the case of metal parts which are firmly clamped against each other and subject to continuous vibration since the varnish in the clamped region wears thin and, in time, cracks so as to allow moisture from the environment to reach the metals.

Another well known measure is to interpose a sheet of electrically insulating material (washer), constituted by a paste of natural or artificial fibres with a synthetic binder, between the parts connected; this solution is not suitable for very strong connections between mechanical components which are subject to considerable stress, such as vibrations in all directions, and which must be clamped very tightly together, since the material of the inserted washer normally has a limited rigidity whereby the coupling can slacken in time.

The object of the present invention is therefore to provide protection against electrolytic corrosion at junctions between metal parts, particularly for a coupling between a bearing and a strut of a motor vehicle, which is free from the problems encountered in similar devices and ensures effective and long-lasting protection even in onerous working conditions.

In accordance with the purpose indicated, there is provided a bearing unit according to claim 1, which comprises inter alia an innovative protective element for protecting junctions between metal parts against electrolytic corrosion, particularly for a coupling between a wheel bearing of a motor vehicle and the corresponding strut, the bearing including a fixed outer ring with an attachment flange for connecting the bearing to the strut, the protective element being characterised in that it is constituted by a shield of sheet metal which is electrically passivated or at least has an anti-corrosive coating on opposite surfaces, shaped so as to fit closely over a contact surface of one of the metal parts to keep the parts separated from each other.

Particular embodiments of the invention are set out in the dependent claims.

These characteristics of the invention will become more apparent from the following description of a preferred embodiment, given by way of non-limitative example, with reference to the appended drawings, in which:
Figure 1 is a radial section through a bearing for a motor-vehicle wheel provided with a corrosion-protective element according to the invention;
Figure 2 shows a detail of Figure 1 on an enlarged scale;
Figure 3 shows a different embodiment of the detail of Figure 2.

With reference to the drawings, a rolling bearing commonly used in the motor-vehicle field as a support for the drive wheels is shown indicated 1; in this specific case, the bearing 1 comprises a double ring of rolling bodies 2 which roll in tracks 3, both formed in a single outer ring 4, and in tracks 5 formed in two inner rings 6 formed separately to facilitate assembly; the outer ring 4 is fixed and has a flange 7 for connecting the bearing 1 to a strut 8 of the vehicle, part of which is shown in section for simplicity; the inner rings 6 are keyed to a spindle of a constant-velocity coupling not shown.

Since the materials constituting the outer ring 4 and the strut 8 are generally different, the facing surfaces of the bearing and of the strut in the region of contact tend to oxidise as a result of an electrochemical reaction due to an electrical potential difference, of a voltaic nature, set up between the different metal components; in the presence of moisture this surface oxidation changes to corrosion of the metal in depth and rapidly leads to the formation of rust which in time may cause slackening of the coupling between the outer ring 4 and the strut 8 as well as functional degradation of the members involved in the corrosion.

In accordance with the present invention, in order to prevent the formation of oxides and/or corrosion of the parts in metal-to-metal contact, the outer ring 4 is covered by a protective shield 10 formed from blanked and folded sheet metal, which has been treated, for example passivated, or at least covered by an anti-corrosive coating so as to render its outer surfaces electrically passive; preferably the outer surfaces of the shield 10 are aluminised.

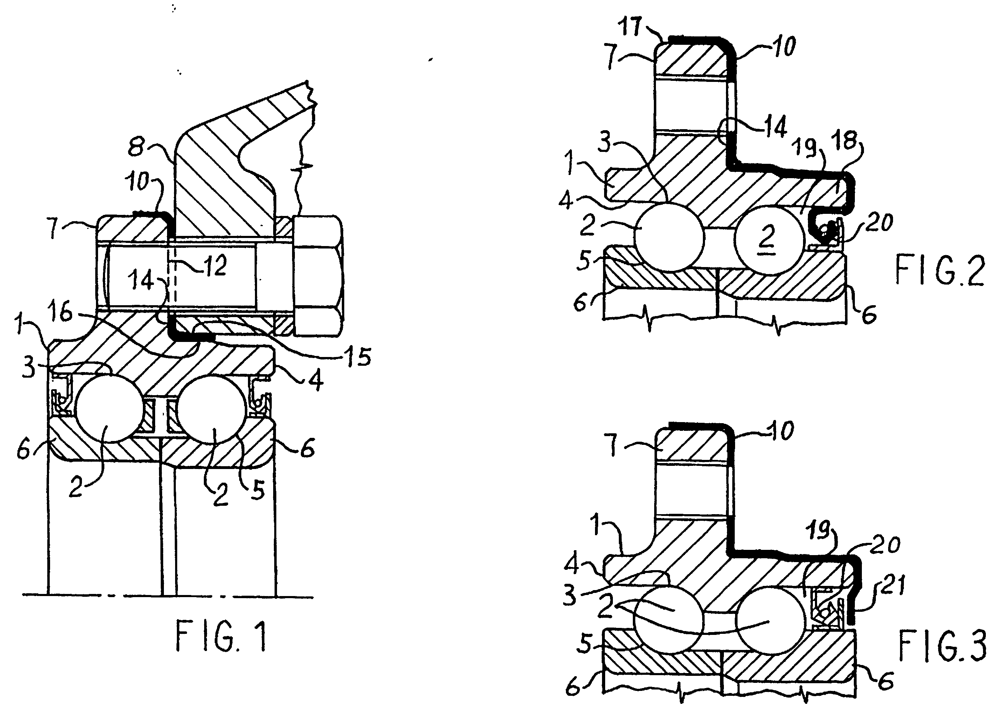

The protective shield 10 is shaped so that it is a perfect, close fit over the metal of the outer ring 4 itself; in the embodiment of Figure 1, the shield 10 is limited so as to cover only the surface of the flange 7 intended to mate with a cooperating surface of the strut 8; in this case the shield 10 is constituted by a radially-extending, flat annular portion 12 which covers a lateral face 14 of the flange 7; the portion 12 is joined to an axially-extending cylindrical portion 15, bent at 90° thereto, which is adapted to be superimposed on a corresponding cylindrical zone 16 of the ring 4 so as to constitute a radial seat for the strut 8.

In order to increase the degree of protection, the shield 10 is extended beyond the zone of contact between the ring and the strut to neighbouring regions (Figure 2), specifically covering the outer face 17 of the flange 7 and the axially-facing edge 18 of the ring 4.

The shield 10 is wrapped over the edge 18 and extends into the annular space 19 between the two rings 4 and 6, where the shield 10 is sealed by co-moulding to a resilient sealing ring 20, of a type with sliding lips, with or without a spring.

Figure 3 shows a different position of the inner edge 21 of the shield 10 which participates in the main sealing provided by the resilient ring 20 as a flat radial shield, terminating at a short distance from the inner ring 6 to form a labyrinthine seal.

## Claims

1. A bearing unit for supporting a wheel of a motor vehicle, the unit comprising a strut (8), a bearing (1) and a corrosion protective element (10) for protecting, in use, said bearing against electrolytic corrosion; the bearing (1) comprising in turn a fixed outer ring (4), having an attachment flange (7) for connecting the bearing (1) to said strut (8) and a cylindrical zone (16) adjacent said flange and constituting a radial seat for the strut; the unit being **characterised in that** said corrosion protective element is constituted by a shield (10) of sheet metal which is electrically passivated or at least has an anti-corrosive coating on opposite surfaces; and **in that** said shield (10) is shaped so as to comprise a radially-extending flat annular portion (12), which close fit over a lateral face (14) of said flange (7), and respective axially-extending cylindrical portions, which are bent at 90° thereto in opposite axial directions and projects from respective opposite ends of said annular portion (12) to respectively close fit over said cylindrical zone (16) of the ring (4) and a radially outer face (17) of said flange (7).

2. A unit according to Claim 1, **characterised in that** a first axially-extending cylindrical portion (15) of the shield (10), which close fit over said cylindrical zone (16) of the ring (4), extends so as to cover an axially-facing edge (18) of the ring (4) and is integrally provided with sealing means (20, 21) which extend into an annular axially-facing space (19) between the outer ring (4) and an inner ring (6) of the bearing.

3. A unit according to Claim 2, **characterised in that** said sealing means comprise a resilient sealing ring (20) co-molded to said shield (10).

4. A unit according to Claim 2, **characterised in that** said sealing means comprise an inner edge (21) of said shield (10), shaped so as to partly close said annular axially-facing space (19) and terminating at a short distance from said inner ring (6) to form a labyrinthine seal.

## Patentansprüche

1. Lager-Einheit zum Tragen eines Rades bzw. einer Welle eines Motorfahrzeugs, welche Einheit eine Strebe (8), ein Lager (1) und ein Korrosions-Schutzelement (10) zum Schützen des Lagers gegen elektrolytische Korrosion im Betrieb umfasst, wobei das Lager (1) seinerseits einen festen äußeren Ring (4), der einen Anbringungs-Flansch (7) zum Verbinden des Lagers (1) mit der Strebe (8) hat, und einen zylindrischen Bereich (16) umfasst, der dem Flansch benachbart ist und einen radialen Sitz für die Strebe bildet, welche Einheit **dadurch gekennzeichnet ist, dass** das Korrosions-Schutzelement durch eine Abdeckung (10) aus Blech eines Metalls gebildet ist, das elektrisch passiviert ist oder zumindest eine Antikorrosions-Beschichtung auf voneinander abgewandten Oberflächen hat, und dass die Abdeckung (10) derart geformt ist, dass sie einen sich radial er-streckenden flachen, ringförmigen Teil (12), der dicht über eine seitliche Fläche (14) des Flansches (7) gesetzt ist, und jeweilige sich axial erstreckende zylindrische Teile umfasst, die in bezug auf diesen in entgegengesetzten axialen Richtungen um 90° gebogen sind, und von jeweiligen voneinander abgewandten Enden des ringförmigen Teils (12) vorsteht, um jeweils dicht über dem zylindrischen Bereich (16) des Rings (4) und einer in radialer Richtung äußeren Fläche (17) des Flansches (7) zu sitzen.

2. Einheit nach Anspruch 1, dadurch **gekenzeichnet**, dass sich ein erster sich axial erstreckender zylindrischer Teil (15) der Abdeckung (10), der dicht über dem zylindrischen Bereich (16) des Rings (4) sitzt, derart erstreckt, dass er einen axial nach außen weisenden Rand (18) des Rings (4) abdeckt und einstückig mit AbdichtungsMitteln (20, 21) versehen ist, die sich in einen ringförmigen axial nach außen weisenden Raum (19) zwischen dem äußeren Ring (4) und einem inneren Ring (6) des Lagers erstrecken.

3. Einheit nach Anspruch 2, dadurch **gekenzeichnet**, dass die Abdichtungsmittel einen elastischen Dichtungsring (20) umfassen, der an der Abdeckung (10) angeformt ist.

4. Einheit nach Anspruch 2, dadurch **gekenzeichnet**, dass die Abdichtungsmittel einen inneren Rand (21) der Abdeckung (10) umfassen, der derart geformt ist, dass er teilweise den ringförmigen axial nach außen weisenden Raum (19) verschließt und in einer kurzen Entfernung von dem inneren Ring (6) endet, um eine Labyrinthdichtung zu bilden.

## Revendications

1. Unité de support pour supporter une roue d'un véhicule à moteur, l'unité comprenant une jambe (8), un roulement (1) et un élément de protection contre la corrosion (10) pour protéger, en utilisation, ledit roulement de la corrosion électrolytique, le roulement (1) comprenant lui-même une bague extérieure fixe (4), comportant une bride de fixation (7) pour connecter le roulement (1) à ladite jambe (8) et une zone cylindrique (16) adjacente à ladite bride et constituant un siège radial pour la jambe; l'unité étant **caractérisée en ce que** ledit élément de protection contre la corrosion est constitué d'un écran (10) en métal en feuille qui est passivé électriquement ou, au moins, comporte un revêtement anti-corrosif sur des surfaces opposées, et **en ce que** ledit écran (10) a une forme telle qu'il comprend une partie annulaire plate (12) s'étendant radialement, qui s'ajuste serré sur une face latérale (14) de ladite bride (7), et des parties cylindriques respectives s'étendant axialement, qui y sont inclinées à 90° dans des directions axiales opposées et fait saillie depuis des extrémités opposées respectives de ladite partie annulaire (12) pour s'ajuster serré respectivement sur ladite zone cylindrique (16) de la bague (4) et une face radialement extérieure (17) de ladite bride (7).

2. Unité selon la revendication 1, **caractérisée en ce qu'**une première partie cylindrique s'étendant axialement (15) de l'écran (10), qui s'ajuste serré sur ladite zone cylindrique (16) de la bague (4), s'étend de façon à recouvrir un bord faisant face axialement (18) de la bague (4) et est munie d'un seul tenant de moyens d'étanchéité (20, 21) qui s'étendent dans un espace annulaire faisant face axialement (19) entre la bague extérieure (4) et une bague intérieure (6) du roulement.

3. Unité selon la revendication 2, **caractérisée en ce que** lesdits moyens d'étanchéité comprennent une bague élastique d'étanchéité (20) moulée conjointement audit écran (10).

4. Unité selon la revendication 2, **caractérisée en ce que** lesdits moyens d'étanchéité comprennent un bord intérieur (21) dudit écran (10), dont la forme est destinée à fermée partiellement ledit espace annulaire faisant face axialement (19) et se terminant à une courte distance de ladite bague intérieure (6) pour former un joint labyrinthique.
